# EUROPEAN PATENT APPLICATION

(11) **EP 4 725 597 A1**
(43) Date of publication of application: **15.04.2026**
(21) Application number: 23940614.3
(22) Date of filing: 06.06.2023
(51) Int. Cl.: B01J 35/00, B01J 21/06, B01J 37/02, B32B 15/08, C09D 1/00, C09D 5/03

(54) **RESIN MEMBER**

(71) Applicant: Nissan Motor Co., Ltd., Yokohama-shi, Kanagawa 221-0023 (JP)
(72) Inventor: IZAWA, Yoshinori, Atsugi-shi, Kanagawa 243-0123 (JP); KOSEMURA, Tooru, Atsugi-shi, Kanagawa 243-0123 (JP)
(74) Representative: Grünecker Patent- und Rechtsanwälte PartG mbB
(86) International application number: PCT/JP2023/020927
(87) International publication number: WO 2024/252508

(57) **Abstract**

A resin part of the present invention includes a photocatalytic coating on a surface of a resin base body.

The photocatalytic coating has a sea-island structure in which island parts containing anatase type titanium dioxide particles are dispersed within a sea part containing a metal material, so that it is possible to provide a resin part including a photocatalytic coating that achieves both high photocatalytic effect and prevention of deterioration of the resin base body.

## Description

### TECHNICAL FIELD

The present invention relates to a resin part, and more particularly, to a resin part having self-cleaning properties.

### BACKGROUND OF THE INVENTION

Titanium dioxide has a photocatalytic effect that brings out an oxidation effect through light energy, can oxidatively decompose organic matter such as contaminants and odorous substances, and also exhibits antibacterial and antiviral effects, so that by covering the surface of a part with titanium dioxide, it is possible to provide self-cleaning properties that keep the surface of the part clean.

The photocatalytic effect of titanium dioxide with an anatase type crystal structure is higher than that of titanium dioxide with a rutile type crystal structure, and the titanium dioxide with the anatase type crystal structure transforms into that with the rutile type crystal structure at a temperature exceeding 700 °C, resulting in a decrease in the photocatalytic effect of titanium dioxide.

Patent document 1 discloses a photocatalytic coating material that includes titanium dioxide with large particles obtained by granulation, thereby reducing the transition from anatase type titanium dioxide to rutile type titanium dioxide due to heat during thermal spraying of the titanium dioxide, thereby improving the residual rate of anatase type titanium dioxide relative to the total titanium dioxide.

### RELATED ART LITERATURE

### Patent Literature

Patent Document 1 : Japanese Patent No. 3,944,551

### SUMMARY OF THE INVENTION

### Technical Problem

However, in the photocatalytic coating material disclosed in Patent Document 1, the transition of titanium dioxide to the rutile type is not sufficiently reduced, resulting in low photocatalytic effect, and the oxidation effect of titanium dioxide causes deterioration of the resin base body.

The present invention has been made in view of the problems possessed by the conventional art, and the objective is to provide a resin part including a photocatalytic coating that has a high photocatalytic effect on the surface and can prevent deterioration of the resin base body.

### Solution to Problem

As a result of extensive research to achieve the above objective, the inventors found that the above objective can be achieved by forming the photocatalytic coating into a sea-island structure in which island parts containing anatase type titanium dioxide particles are dispersed within a sea part containing a metal material, thereby completing the present invention.

That is, a resin part according to an aspect of the present invention includes a photocatalytic coating on a surface of a resin base body.

The photocatalytic coating has a sea-island structure in which island parts containing anatase type titanium dioxide particles are dispersed in a sea part containing a metal material.

In addition, a method for producing a resin part according to an aspect of the present invention is a method for producing the resin part described above.

The method includes spraying raw material particles in a non-molten state onto the surface of a resin base body to form the photocatalytic coating (hereinafter referred to as a "coating step"),
wherein the raw material particles include anatase type titanium dioxide particles that have been metal-plated and metal particles,
the coating step includes reducing a temperature of the raw material particles that collide with the resin base body to 100 °C or more and 150 °C or less, and
the method further includes at least one of polishing and grinding the surface of the photocatalytic coating that has been formed to expose the anatase type titanium dioxide particles.

### Advantageous Effect of the Invention

According to an embodiment of the present invention, the photocatalytic coating has a sea-island structure in which island parts containing anatase type titanium dioxide particles are dispersed within a sea part containing a metal material, so that it is possible to provide a resin part including a photocatalytic coating that achieves both high photocatalytic effect and prevention of deterioration of the resin base body.

### BRIEF DESCRIPTION OF THE DRAWINGS

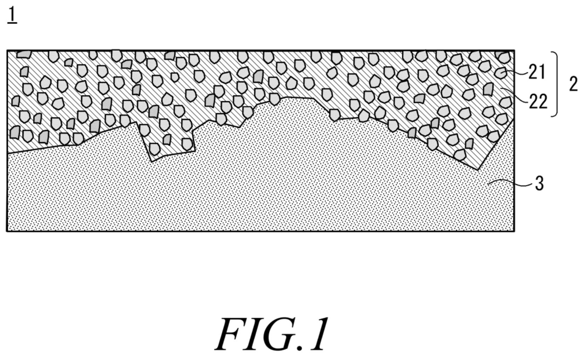

FIG. 1 is a cross-sectional view illustrating an example of the structure of the resin part according to an embodiment of the present invention.

### DESCRIPTION OF EMBODIMENTS

### < Resin Part >

A resin part according to an embodiment of the present invention will be described in detail.

The resin part according to an embodiment of the present invention includes, on a surface of a resin base body, a photocatalytic coating having a sea-island structure in which island parts containing anatase type titanium dioxide particles are dispersed within a sea part containing a metal material.

As illustrated in FIG. 1, the photocatalytic coating according to an embodiment of the present invention includes island parts containing anatase type titanium dioxide particles dispersed within a sea part containing a metal material, and the anatase type titanium dioxide particles are surrounded by the metal material.

Therefore, light incident on the photocatalytic coating is reflected by the sea part containing the metal material and does not penetrate to the vicinity of the resin base body, so that even if the titanium dioxide particles are present in the vicinity of the resin base body, deterioration of the resin base body due to the oxidation effect of the titanium dioxide particles can be prevented.

In the sea part containing the metal material according to an embodiment of the present invention, the metal material is continuously bonded to each other, may be bonded not only metallurgically but also mechanically, and furthermore, may include interfaces or voids, inside.

The photocatalytic coating can be formed by spraying raw material particles containing anatase type titanium dioxide particles metal-plated and metal particles onto the resin base body using a cold spray method.

The cold spray method is a method in which the supersonic flow of working gas makes the raw material particles in solid phase, that is a non-molten state in which the particles have not been melted or gasified, collide with the base material to form a coating.

According to this cold spray method, the photocatalytic coating can be formed at low temperatures, and since it is not necessary to heat the anatase type titanium dioxide particles to the transition temperature or more as distinct from other thermal spraying methods, the titanium dioxide particles are prevented from being transferred from the anatase type to the rutile type, and a high photocatalytic effect can be obtained.

The Vickers hardness of the metal material described above is preferably 700 (Hv) or less, more preferably 500 (Hv) or less, and even more preferably 400 (Hv) or less.

The above metal material also serves as a binder for forming a photocatalytic coating, and when the Vickers hardness of the metal material is 700 (Hv) or less, the metal particles included in the sea part containing the metal material described above can be significantly plastically deformed by collision, thereby improving the coating strength.

That is, since the above metal material has ductility and malleability, and is plastically deformable, the metal particles sprayed onto the resin base body by the cold spray method, which form the sea part containing the metal material, sink into the resin base body, undergo plastic deformation and adhere to the resin base body, form uneven bumps and dips at the interface with the resin base body, and bond to the resin base body through an anchor effect.

The metal particles that enter the bump and dips and adhere to the resin base body not only bond to the resin base body, but also are plastically deformed by metal particles that have collided later and titanium dioxide particles metal-plated, and receive and hold these raw material particles that have collided later, reducing bounce thereof.

Therefore, in the photocatalytic coating formed by the cold spray method, the metal particles that have been bonded to the resin base body through the anchor effect described above are further subjected to collisions with a metal particle to metallurgically bond to each other, thereby forming the sea part containing the metal material in the photocatalytic coating.

Then, the metal that is plated on the surface of the anatase type titanium dioxide particles metal-plated and included in the raw material particles metallurgically bonds with the above metal material, forming the photocatalytic coating in which island parts containing anatase type titanium dioxide particles are dispersed in the sea part containing the metal material.

It is preferable that the cross-sectional area percentage (%) of the sea part containing the metal material in the cross-sectional area of the photocatalytic coating is greater than 50% and 95% or less, more preferably 55% or more and 95% or less, and even more preferably 60% or more and 80% or less, although it depends on the thickness of the photocatalytic coating.

The photocatalytic coating includes the sea part containing the metal material and accounting for 50% or more of the cross-sectional area percentage (%) in the cross-sectional area of the photocatalytic coating, thereby exerting high adhesion strength. Furthermore, the photocatalytic coating including the sea part containing the metal material and accounting for 95% or less of the cross-sectional area percentage (%) in the cross-sectional area of the photocatalytic coating, because the contained amount of anatase type titanium dioxide of the photocatalytic coating is increased, achieves a high photocatalytic effect.

That is, in the photocatalytic coating, when the sea part containing the metal material accounts for more than 95% of the cross-sectional area percentage (%) in the cross-sectional area of the photocatalytic coating, the amount of titanium dioxide particles decreases, and then the photocatalytic activity decreases. In addition, the sea part accounts for 50% or less of the cross-sectional area percentage (%) to the cross-sectional area of the photocatalytic coating, because metal particles of the sea part serve as binder as will described later, the coating strength of the photocatalytic coating may reduce.

Examples of the above metal material includes, but are not limited to, particles of metal elements or alloys.

Examples of the above metal elements include, but are not limited to, copper (Cu), aluminum (Al), nickel (Ni), chromium (Cr), iron (Fe), silver (Ag), titanium (Ti), zinc (Zn), and magnesium (Mg).

In addition, examples of the above alloys include, but are not limited to, an alloy containing at least 50% by mass of one metal selected from the group consisting of copper (Cu), aluminum (Al), nickel (Ni), chromium (Cr), iron (Fe), silver (Ag), titanium (Ti), zinc (Zn), and magnesium (Mg).

Among them, copper and silver have a bactericidal effect, and therefore, an element of copper or silver or an alloy containing at least 50% by mass of copper or silver can be preferably used as the above metal material.

In addition, from the viewpoint of design, using the single elements of copper (Cu), aluminum (Al), nickel (Ni), chromium (Cr), or silver (Ag) as the metal material can give the photocatalytic coating a glossy, shiny appearance. On the other hand, using the single elements of iron (Fe) or titanium (Ti) as the metal material can give the photocatalytic coating a matte finish.

Furthermore, the above alloys, such as Cu-Zn and Cu-Ni-Zn, by changing the component ratio, can not only improve the hardness and durability of the photocatalytic coating, but also can change the color of the photocatalytic coating.

In addition, by making the surface roughness (Ra) of the photocatalytic coating 25 µm or less, the tactile feel can be improved. When the surface roughness (Ra) thereof is in the range of 5 µm or more and 25 µm or less, a luxurious feel can be created by the grained embossment texture, and by making the surface roughness (Ra) thereof less than 5 µm, the metallic luster can be improved.

The average particle size of the above metal particles is preferably 10 µm or more and 50 µm or less, more preferably 20 µm or more and 40 µm or less.

This increases the kinetic energy of movement during cold spraying, which can improve the efficiency of coating formation.

In addition, in the photocatalyst coating with a thickness of about 100 µm, when the particle diameter of the metal particles exceeds 50 µm, the metal particles tend to fall off during at least one of polishing and grinding, and in addition, the metal particles become larger, resulting in a decrease in the uniform dispersibility of the titanium dioxide particles on the surface of the photocatalyst coating.

Example of the titanium dioxide particles metal-plated is, but is not limited to, anatase type titanium dioxide particles that are metal-plated with a single metal element or an alloy that can be used for the above metal material and have an average particle size of 0.01 µm or more and 2 µm or less.

The above titanium dioxide particles metal-plated can be formed by carrying a palladium (Pd) catalyst on the surfaces of the titanium dioxide particles and then subjecting the surfaces to electroless plating.

In addition, anatase type titanium dioxide particles carrying copper in the particles exhibit a photocatalytic effect not only through ultraviolet light but also through visible light. This allows the above particles to be imparted with self-cleaning properties, and the particles are therefore preferably used even indoors where there is little ultraviolet light.

Example of such titanium dioxide particles is, but is not limited to, TKP-103 made by Tayca Corporation.

The resin part according to an embodiment of the present invention, since having self-cleaning properties, can be preferably used for automotive resin components such as steering wheels and door handles that are prone to adhesion of sebum stains, as well as for transport device resin components, electronic device resin components, home appliance resin components, office equipment resin components, housing resin components, medical hygiene resin components, and the like.

### < Method for producing resin part >

Next, a method for manufacturing the above resin part will be described in detail.

The method for manufacturing a resin part according to an embodiment of the present invention includes spraying raw material particles containing anatase type titanium dioxide particles metal-plated and metal particles onto the surface of a resin base body by a cold spray method to form a photocatalytic coating (corresponding to a "coating step"), and at least one of polishing and grinding the surface of the photocatalytic coating formed in the coating step to expose the anatase type titanium dioxide particles.

As described above, the cold spray method is a method in which a supersonic flow of the working gas at a temperature of about 500 to 600 °C at which a raw material particle does not melted, makes raw material particles in solid phase collide with a base material as the particles remain in non-molten state or in non-gasified state to form a coating.

According to the cold spray method described above, since the metal particles in the raw material particles collide therewith at supersonic speed and undergo plastic deformation to form a coating, changes in the properties of the raw material particles due to heat can be minimized, unlike other thermal spraying methods, thereby preventing titanium dioxide particles from being transferred from the anatase type to the rutile type.

In a typical cold spray method in which a coating is formed on a metal base material, in order to prevent a decrease in the temperature and kinetic energy of the raw material particles, the nozzle for spraying the raw material particles is brought close to the metal base material, and the raw metal material particles are made to collide with the metal base material.

In the present invention, since a coating is formed on the resin base body, the distance between the nozzle for spraying raw material particles and the resin base body is increased to lower the temperature of the working gas below the heat-resistant temperature of the resin base body.

Specifically, the working gas sprayed at 500 °C or more and 600 °C or less is lowered to 100 °C or more and 150 °C or less to make raw material particles collide with the resin base body. This prevents deformation and deterioration of the resin base body due to the working gas.

The working gas expands when sprayed from the nozzle, causing the temperature of the working gas to decrease. When the distance between the nozzle and the resin base body is too close, the temperature of the working gas will not drop sufficiently, causing the resin base body to melt. Conversely, when the distance therebetween is too far, not only will the working gas cool too much, but also the speed of the raw material particles will decrease, reducing the adhesion between the raw material particles to the resin base body. Therefore, the distance between the nozzle and the resin base body is preferably about 150 mm.

Examples of the resin included in the resin base body include, but are not limited to, a thermoplastic resin and a thermosetting resin.

In particular, when the resin base body is a thermoplastic resin, the kinetic energy of the raw material particles is converted into thermal energy by collision, and the thermoplastic resin at the site where the raw material particles collide locally melts and welds with the raw material particles that have collided, so that the bond strength between the resin base body and the photocatalytic coating can be improved in conjunction with the bonding caused by the anchor effect.

The speed of the raw material particles that can be embedded into the resin base body by the cold spray method and bonded by the anchor effect is preferably 200 m/s or more and 500 m/s or less, although this depends on the hardness of the resin base body, and the like.

The method for manufacturing a resin part according to an embodiment of the present invention includes, after the coating step, at least one of polishing and grinding the surface of the photocatalytic coating that have been formed.

As described above, the surface of the titanium dioxide particles in the raw material particles is metal-plated, so that by at least one of polishing and grinding the surface of the photocatalytic coating, the metal that has been plated is peeled off, and the anatase type titanium dioxide is exposed to the surface of the photocatalytic coating, resulting in a photocatalytic effect.

In addition, by adjusting the surface roughness of the photocatalytic coating by at least one of polishing and grinding, as described above, it is possible to improve the texture of the coating and also impart design features such as gloss finish, matte finish, and grained embossment texture.

### EXAMPLES

Hereinafter, the present invention will be explained in more detail by way of examples, but the present invention is not limited to the following examples.

### [Example 1]

A palladium (Pd) catalyst was supported on the surface of anatase type titanium dioxide particles (JA-1 made by Tayca Corporation), and electroless plating was performed to obtain anatase type titanium dioxide particles having copper-plated surfaces.

Raw material particles formed by mixing copper particles (Cu-HWQ-350 made by Fukuda Metal Foil & Powder Co., Ltd.) and the above-described plated anatase type titanium dioxide particles in a mass ratio of 4:1 were sprayed onto the surface of the polypropylene resin base body by the cold spray method under the conditions described below to form a photocatalytic coating, and the surface of the photocatalytic coating was ground with a brush to produce a resin part with the structure illustrated in FIG. 1.

### Cold Spray Conditions

Apparatus: PCS-1000 (made by Plasma Giken Co., Ltd.)
Working gas: N2 gas, Spray pressure: 3 MPa, Spray temperature: 600 °C
Distance between nozzle and base material: 150 mm
(Temperature of raw material particles when colliding with a resin base body: 100°C, collision speed of raw material particles: 300 m/s)

The cross section of the resin part produced in Example 1 was observed by energy dispersive X-ray spectroscopy (SEM-EDX) and the elemental analysis of the photocatalytic coating was performed, which revealed that the resin part has a sea-island structure in which island parts containing anatase type titanium dioxide particles are dispersed in a sea part containing metal material, and that the deterioration of the resin base body due to titanium dioxide can be prevented.

### REFERENCE SIGNS LIST

- 1: Resin part
- 2: Photocatalytic coating
- 21: Anatase type titanium dioxide particles
- 22: Metal material
- 3: resin base body

## Claims

1. A resin part comprising:
a photocatalytic coating on a surface of a resin base body,
wherein the photocatalytic coating has a sea-island structure in which island parts containing anatase type titanium dioxide particles are dispersed within a sea part containing a metal material.

2. The resin part according to claim 1,
wherein the photocatalytic coating includes the sea part whose cross-sectional area percentage (%) in the cross-sectional area of the photocatalytic coating is greater than 50% and 95% or less.

3. The resin part according to claim 1,
wherein the metal material has a Vickers hardness of 700 Hv or less.

4. The resin part according to claim 1,
wherein the resin base body and the photocatalytic coating are bonded at least by an anchor effect.

5. The resin part according to claim 1,
wherein the photocatalytic coating has a surface roughness (Ra) of 25 µm or less.

6. The resin part according to any one of claims 1 to 5,
wherein the resin part is included in a resin component selected from a group consisting of automotive resin components, transport device resin components, electronic device resin components, home appliance resin components, office equipment resin components, housing resin components, and medical hygiene resin components.

7. A method for producing the resin part according to any one of claims 1 to 5, the method comprising:
spraying raw material particles in a non-molten state onto the surface of the resin base body to form the photocatalytic coating,
wherein the raw material particles include anatase type titanium dioxide particles metal-plated,
spraying raw material particles in a non-molten state onto the surface of the resin base body to form the photocatalytic coating further comprises
reducing a temperature of the raw material particles that collide with the resin base body to 100 °C or more and 150 °C or less,
the method further comprises at least one of polishing and grinding a surface of the photocatalytic coating formed to expose the anatase type titanium dioxide particles.

8. The method for producing the resin part according to claim 7,
wherein spraying the raw material particles in a non-molten state onto the surface of the resin base body to form the photocatalytic coating further comprises
making the raw material particles collide with the resin base body at a speed of 200 m/s or more and 500 m/s or less.
